# EUROPEAN PATENT APPLICATION

(11) **EP 4 647 805 A1**
(43) Date of publication of application: **12.11.2025**
(21) Application number: 24174596.7
(22) Date of filing: 07.05.2024
(51) Int. Cl.: G01S 7/48, G01S 17/42, G01S 17/86, G01S 17/89

(54) **LASER SCANNER WITH IMAGE DERIVED SCAN SETTING FUNCTIONALITY**

(71) Applicant: LEICA GEOSYSTEMS AG, 9435 Heerbrugg (CH)
(72) Inventor: WIESNER, Tobias, 9442 Berneck (CH); HERBST, Christoph, 6850 Dornbirn (AT)
(74) Representative: Kaminski Harmann

(57) **Abstract**

A stationary terrestrial laser scanner and method with image processing, based on a machine learning algorithm, of a 2D-image of a scan sphere, captured with a camera of the stationed laser scanner before measurement of scan points, in such a way that the image is partitioned in multiple clusters of different predefined categories of measurement significance and setting at least one adaptable scan parameter according to the presence and/or absence of clusters of a significance category in the first 2D-image.

## Description

The invention relates to a terrestrial laser scanner and method for scanning with camera image based scan setting adaption according to the independent claims.

3D scanning is a very effective technology for producing millions of spatial measurement points of object surfaces within a scan sphere within minutes or seconds. Terrestrial laser scanning technology is in particular used to collect static 3D-data of fixed non-moving man-made structures (such as buildings, construction sites, industrial plants) or scenes of non-moving man-made objects (e.g., crash sites). Typical measurement tasks are the recording of objects or the surfaces thereof such as industrial plants, house facades or historical buildings, but also accident sites and crime scenes.

For this purpose, a stationary laser scanner guides the measurement beam of a distance measuring unit continuously over object surfaces within a measurement space or scan sphere and in the process simultaneously detects direction and distance with respect to the respective measurement point. Direction determination is based on angle measurements. Distance determination is based on reflected measurement radiation, reflected from the irradiated target object so that at least a part of the measuring radiation is reflected back to the laser scanner and detected. For detection, the scanner has a receiver embodied as an optoelectronic sensor, which is designed for time-resolved detection of the reflected measuring radiation, for example, embodied as an APD diode. From the distance and the direction information correlated therewith for each scan point, a so-called 3D point cloud is generated from a plurality of scan points by means of data processing.

Such terrestrial measuring devices have for this purpose at least one radiation source or emitter for generating optical measurement radiation, often laser radiation, and optical means, including a rotating deflector, by means of which the generated measuring radiation can be emitted in free space onto a target or object to be measured, because of which these devices are also referred to as so-called free beam sensors. Optical measurement radiation is understood in this case as electromagnetic radiation, not only in the visible range of the spectrum, but rather also radiation in the ultraviolet, in the infrared, and in the terahertz range. Laser scanning devices are known which use measuring radiation having a wavelength of 405 nm, 532 nm, 635 nm, 650-690 nm, 780 nm or 785 nm, 795 nm, 808-850 nm, 905 nm, 980 nm, 1064 nm, or between 1500 and 1570 nm.

In terms of the fundamental structure, such terrestrial scanners are thus designed to determine a distance to an object point as measurement or scan point using an electro-optical and often laser-based distance measuring device. The measurement beam of the distance measuring device is deflected in one spatial direction by rotating aforementioned deflector about one axis (elevation axis) and -independent therefrom- in another spatial direction by rotation of a top part or body, comprising or supporting the deflector part, about a second axis (azimuth axis). Said body is for example rotatably mounted to a base comprising a tripod for stationing the laser scanner at a known, referenced location. Thereby, rotational angles are measured by respective angle encoders and the rotation speed of the deflector/about the elevation axis usually is much higher than the speed of rotation of the body/about the azimuth axis.

As a result, a spatial measurement region -the scan sphere-can be recorded. The scanning wide in the horizontal is here frequently 360°, i.e. one full circle about the azimuth axis, and in the vertical for example 180°, i.e. a half circle about the elevation axis. The result is that one hemisphere is covered, which together with a maximal measurement distance define the measurement space or scan sphere.

The measurement is usually effected with determination of distance and angles, that is to say in spherical coordinates, which can also be transformed into Cartesian coordinates for display and further processing. For fast and accurate scanners, in particular a short measurement time in conjunction with high measurement accuracy is required, for example a distance accuracy in the mm range or below with measurement times of the individual points in the sub-microseconds to milliseconds range. In this case, the measurement region ranges from a few centimeters up to a few kilometers.

The spatial measurement resolution or scan density is of particular importance in this case. It determines what details can still be identified, but influences also the duration of the scanning process and the volume of data obtained in the process. In order not to miss relevant object features, the demand of resolution for such relevant features mainly determines the overall scan density. As a result, measurement projects with modern high-speed laser scanners produce 3D point clouds having a cardinality of, for example, hundreds of millions or billions of scan points and beyond, many of them virtually superfluous as not providing useful information, e.g. representing surfaces of objects of low or no interest (at least with too much detail). The storage, transmission and processing of the enormous volume of data associated therewith poses great challenges for hardware and software. For example, the execution speed of programs for evaluating the 3D data is greatly dependent on the number of scan points; thus, unnecessary points result in a waste of processing time.

A particular problem in processing point clouds is the so-called point cloud registration, i.e. the combination of point clouds of adjacent scan spheres taken from different stations to one combined point cloud, based on overlapping scan regions. Thereby, objects present in the overlap region in one scan/point cloud but not present in the other point cloud or at a different position, e.g. a moving object such as a vehicle or leafwork moved by wind, can lead to registration errors.

Another problem with prior art scanners can evolve for example from highly reflective surfaces such as window panes, mirrors, car lights or street signs. Such object surfaces can lead for instance to an oversaturation of the light receiver of the laser scanner or to so called multi-path effects, created by the detection of return signals that have been reflected more than one time. Windows are further problematic in that measurement radiation may be either reflected by the window itself or by objects behind it which can lead to ambiguities.

In addition to the distance measuring units, modern laser scanners often comprise one or more color/RGB cameras that are either located inside or mounted on the housing of the scanning device. The camera can capture color images/photographs of the scan sphere in known spatial relationship to the scanned 3D-data to enable mapping of image data to the point cloud data, i.e. a color or other image-based rendition of a scanned environment. Each scan point of the point cloud is colorized using the color value of one or more data points in an image closest to that scan point which is seen as corresponding image point(s). Therewith, for example a colorized point cloud can be provided.

Also regarding point cloud colorization resp. 2D-imaging of the scan environment, problems can occur due to light conditions. For example, aforementioned highly reflective objects or strong natural or man-made light sources can lead to suboptimal or insufficient images, e.g. inconsistent color information.

In the worst case, any such undesired effects are noticed only later in the office during the data processing when it is too late or basically impossible to repeat the scan or imaging process.

Therefore, the object of the present invention is to provide an improved stationary terrestrial laser scanner.

This object is achieved in accordance with the invention by the characterizing features of the independent claims or by features of the dependent claims, and these solutions are also developed by features of the dependent claims.

The present invention relates to a terrestrial laser scanner for coordinative measurement of a plurality of scan points representing surfaces of objects within a scan sphere, for generation of a point cloud comprising the measured scan points.

The laser scanner comprises a base for stationing the laser scanner, a body mounted on the base, a first motor configured for rotating the body relative to the base around an azimuth axis with a first speed and a first angle encoder configured for determining a first angle of the body with respect to the azimuth axis.

The laser scanner further comprises an emitter configured for emitting optical measurement radiation, a deflector supported by said body and configured for deflecting emitted measurement radiation in form of a free beam onto a respective scan point of an object surface and a receiver configured for detecting reflected measurement radiation reflected back from the respective scan point and deflected onto the receiver by the deflector.

The laser scanner also has a second motor configured for rotating the deflector relative to the body around an elevation axis with a second speed, the second speed being higher than the first speed and a second angle encoder configured for determining a second angle of the deflector with respect to the elevation axis, whereby the first and second angle together define a scanning direction.

In addition, the scanner has at least one camera for capturing 2D-images with an optical camera axis in known spatial relationship to the scanning direction.

Above that, the scanner comprises a control and processing unit configured for measuring of scan points by determining a distance based on detected measurement radiation reflected from the respective scan point, determining an intensity of the reflected measurement radiation, determining first and second angle of the scanning direction for the respective scan point and determining a coordinate of the respective scan point based on the determined first and second angle and the determined distance.

The control and processing unit is further configured for image processing, based on a machine learning algorithm, of a first 2D-image of the scan sphere -the image being captured with said camera of the laser scanner before the measurement of scan points- in such a way that the image is partitioned in multiple clusters of different predefined categories of measurement significance and for setting at least one adaptable scan parameter, in particular in real-time, according to the presence and/or absence of clusters of a significance category in the first 2D-image.

In other words, based on a scanner's camera image taken in advance of a 3D-measurement, a setting controlled by said scan parameter is adjusted in dependence on image content indicating a relevance or meaning for the following measurement procedure respectively for the point cloud to be created.

Optionally, the control and processing unit is configured for capturing and processing subsequent, second 2D-images, for example in form of a live image stream, and continuously or dynamically adapting the at least one adaptable scan parameter based on continuously determined and/or updated image clusters. This allows for example for a continuous monitoring of presence or absence of cluster categories or for a refinement or correction of clusters and therewith a scan parameter dependent thereon.

As another option, the control and processing unit is configured for scan region-specific setting of the adaptable scan parameter, whereby the extent of a respective scan region corresponds to the extent of a corresponding cluster. Hence, at least one parameter can be set region-specific, whereas other parameters may refer to a general scan setting and can be set for the scan as a whole.

As still another option, the control and processing unit is configured for preconfiguring the setting of the adaptable scan parameter by selecting from one of multiple preconfigured scan parameter setting modes according to the presence and/or absence of clusters of a significance category in the first 2D-image. Thus, for example a perimeter range for the scan parameter, which is to be further specified in view of further categories, can be preselected based on presence or absence of (a cluster of) some sort of a "global" category, or a set of parameters to be adapted can be preselected likewise for further category-dependent refinement.

In some embodiments, the adaptable scan parameter controls the emitter and/or the first and/or second motor, for controlling or adapting a scan or measurement density, a scan speed and/or a strength and/or pulse duration and/or frequency of the emitted measurement radiation.

Optionally, the significance categories comprise a category scan background, in particular sky, and/or comprise a category vegetation, more specifically the categories of tree, bush, leafwork and/or grass.

Optionally, the significance categories comprise non-stationary object and/or currently moving object, more specifically the categories vehicle, human-being and/or creature.

Optionally, the significance categories comprise building structure, more specifically the categories wall, ceiling, floor, corner, edge, window and/or door.

Optionally, the significance categories comprise light source, more specifically artificial light source and/or natural light source, and/or (high) reflective surface, more specifically window pane, glass plate, mirror, vehicle light, number plate and/or street sign, and/or low reflective (or scattering or dark) surface.

In above mentioned embodiments with parameter-controlled emitter or motor and with using the categories of scan background, vegetation, non-stationary or moving object, for scan regions corresponding to image clusters of one of said categories, the scan density is set to a (relatively) low level (lower density or less scan resolution than in at least one other scan region), which may include zero (no scanning of such a scan region at all; hence, a scan region corresponding to a cluster categorized as scan background, vegetation and/or non-stationary or moving object is left out) .

In above mentioned embodiments with parameter-controlled emitter or motor and with using the categories of a currently moving object, the scanning is delayed by stopping the first motor (for example for a predefined time length) and/or the scanning is repeated when image processing of a second 2D-image, captured after the first 2D-image, indicates absence of (the previously present) moving object category. Hence, in addition to or instead of blanking out a scan region of a category moving object, the whole scanning is interrupted until it has been recognized in an image that the object has moved out of the scan environment (no category "moving object" is determined) and/or then -when no moving object is occluding objects behind it- at least the according scan region is scanned again.

In above mentioned embodiments with parameter-controlled emitter or motor and with using different (sub-)categories of building structure, for scan regions corresponding to image clusters of one of said categories, the scan density is adapted to a specific category of building structure. For example, walls, ceilings, floors are scanned with a different, in particular low(er) scan density than the scan density applied to corners and edges and/or to windows and/or doors. For instance, the scan density parameter could be set to zero for a window (pane), i.e. a window pane is not scanned at all.

Optionally, the adaptable scan parameter is a parameter of the laser scanner's camera and controls the camera when capturing a point cloud colorization and/or texturing image, in particular controls a camera's imaging resolution and/or a white balancing, and/or controls (application, e.g. insertion in the beam path, of) an attenuator and/or optical filter applicable to reflected measurement radiation ahead of the detector.

The present invention also relates to a method for scanning of a plurality of scan points representing surfaces of objects within a scan sphere with a terrestrial laser scanner, in particular a laser scanner as claimed, for generation of a point cloud, whereby the laser scanner comprises a base for stationing the laser scanner, a body mounted on the base, a first motor configured for rotating the body relative to the base around an azimuth axis with a first speed and a first angle encoder configured for determining a first angle of the body with respect to the azimuth axis, an emitter configured for emitting optical measurement radiation, a deflector supported by the body and configured for deflecting emitted measurement radiation in form of a free beam onto a respective scan point of an object surface, a receiver configured for detecting reflected measurement radiation reflected back from the respective scan point and deflected onto the receiver by the deflector, a second motor configured for rotating the deflector relative to the body around an elevation axis with a second speed, the second speed being higher than the first speed, a second angle encoder configured for determining a second angle of the deflector with respect to the elevation axis, whereby the first and second angle together define a scanning direction, and at least one camera for capturing 2D-images with an optical camera axis in known spatial relationship to the scanning direction.

The method comprises measuring of scan points by determining a distance based on detected measurement radiation reflected from the respective scan point, whereby an intensity of the reflected measurement radiation is determined, determining first and second angle of the scanning direction for the respective scan point and determining a coordinate of the respective scan point based on the determined first and second angle and the determined distance.

The method further comprises an image processing, based on a machine learning algorithm, of a first 2D-image of the scan sphere, captured with the at least one camera of the stationed laser scanner before measuring of scan points, in such a way that the image is partitioned in multiple clusters of different predefined categories of significance for measurement and automatically adapting the scanning, in particular in real-time, according to the presence and/or absence of clusters of a significance category in the first 2D-image.

Optionally, the method comprises adapting the scanning by adapting an automatic tagging of measured scan points, in particular with regard to relevancy and/or quality, and/or an automatic sorting out of measured scan points. By tagging scan points, which can also be applied by tagging groups of scan points as a whole, additional information for a subsequent point (cloud) processing can be provided, allowing for an adapted, improved further processing.

As another option, the measurement radiation is emitted in form of pulses and for scan regions corresponding to image clusters of a category of light source, high or low reflective surface, the scanning is adapted by adapting a selecting from multiple reflected pulses for a respective scan point used for distance determination. For example, the number of reflected pulses or a selection criterion used for distance determination can be adapted.

As still another option, the method comprises automatically verifying sizes of clusters and/or assignment of clusters to significance categories using information gathered with received measurement radiation, in particular a determined 3D-coordinate and/or a quality of the received radiation, in advance of said measurement of scan points. Therefore, a level of confidence of cluster size and/or assignment is determined and a targeted pre-measurement of low-level confidence regions is executed and/or data of already measured scan points is used and the verifying is executed in real-time during the measuring of scan points.

The present invention relates also to a computer programme product comprising programme code which is stored on a machine-readable medium, or being embodied by an electromagnetic wave comprising a programme code segment, and having computer-executable instructions for performing, particularly when executed on a processing unit of a laser scanner according as claimed, the method as claimed.

The laser scanner according to the invention and the method according to the invention will be described in greater detail hereinafter, purely by way of example, with reference to exemplary embodiments depicted schematically in the drawings.

More specifically, in the drawings
- Figs.1a,b: schematically show an exemplary example of a stationary terrestrial laser scanner; and
- Figs.2a,b: schematically illustrate a method for scanning an environment which method can be automatically executed by a control and evaluation unit of such a stationary terrestrial laser scanner.

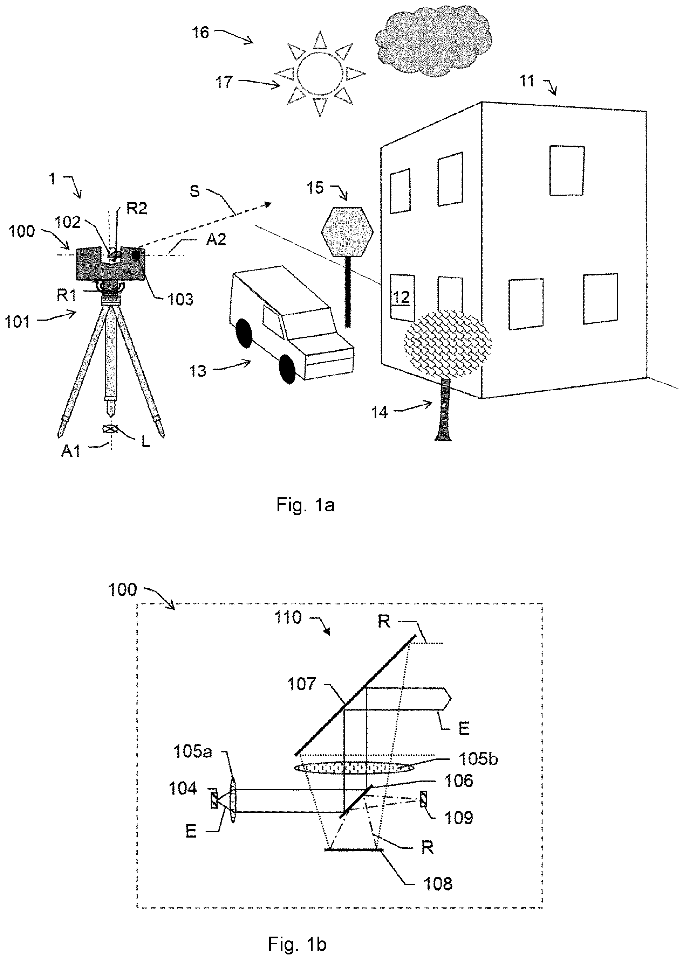

**Figs. 1a**,**b** show an exemplary example of a terrestrial laser scanner 1 for scanning of a measurement space. Figure 1a depicts the laser scanner 1 within the scanning environment whereas figure 1b shows a scheme of an exemplary structure of the distance measurement part 110.

In the example, the measurement space or scanning region is an outdoor setting (street scene) for coordinative measuring of surfaces of buildings/properties 11 as measurement objects. As known in the art, such a laser scanner 1 comprises a base 101, e.g. a tripod with which it is stationed at a location L. An upper part or body 100 of the laser scanner 1 can rotate in a motor driven manner about a vertical or azimuth axis A1 relative to the base 101 (rotation indicated in the figure by arrow R1). A second rotation (indicated in the figure by arrow R2) around a second or elevational rotation axis A2 is provided by a deflector embodied as a rotary mirror 102 which can deflect measurement radiation, e.g. in form of a laser beam originating of laser source 104 as a free beam E along a target or scanning direction S into the measurement space. The respective angular position about the azimuth and elevational axis each or in short the current scanning direction S can be determined by respective angular encoders.

In the example, the radiation source 104 can emit a laser beam E as the measurement radiation, which is pre-focused by a collimating lens 105a as a first optical means and is incident slightly widened on a deflection mirror 106 as a further optical means. The laser beam E is reflected therefrom in the direction of the main objective lens 105b and is guided onto a deflection mirror 107 and from there to above mentioned rotational deflector 102. However, alternatively deflection mirror 107 and rotational deflector 102 can be identical.

By rotating R2 the mirror 102 about the transverse axis A2, the elevational scanning direction can be altered and the measuring beam can be guided in vertical fashion over an object's surface while the azimuth direction can be altered and the beam can be guided horizontally over the surface by rotating R1 the entire upper part 100 about the azimuth axis A1. Hence, the scan direction is continuously changed in accordance with a known scanning pattern.

The extent of rotation about both axis A1, A2 and the (maximal) measurement distance define the measurement space or scan sphere. Often, a so called full-dome scan is performed, meaning a scan sphere about the full rotation in the horizontal with an angular range in the vertical of e.g. α = 270° with a maximal distance of some tenth meters, a hundred meters or several hundred meters so that a spherical range is provided, which depicts almost the entire surrounding up to the maximal range in all spatial directions. However, arbitrary other angle ranges are also possible.

After the reflection of the beam E on the target object surface, the received beam R is guided by the rotatable beam deflection unit 102 through the main objective lens 107 onto a further optical means, a mirror 108. The received radiation beam R is reflected therefrom on to the deflection mirror 106 and guided from there further onto an optical sensor or receiver 109 for time-resolved detection of the measuring radiation, for example an APD diode.

A control and evaluation unit is data-connected to the distance measuring unit 110 resp. to the radiation emitter 104 and a radiation receiver 109 of the scanner 1 as well as above mentioned angular encoders. The control and evaluation unit is embodied to determine, for a multiplicity of measurement points, the distance between the laser scanner 1 and a scan point of a measurement object. Together with the determined scanning direction, a three dimensional coordinate of a respective scan point can be ascertained.

In addition to the ascertained distance resp. 3D-coordinate from the laser scanner 1 (or from the origin of the reference system resp. in relation to the station point L), each scan point may in addition have a brightness value, which is likewise ascertained by the control and evaluation unit. The brightness is a greyscale value which is ascertained, for example, by integrating the band-pass-filtered and amplified signal of the radiation receiver over a measuring period assigned to the measurement point. These values form an intensity image of the scan. As an alternative to a representation using greyscale values, a mapping onto colors is known in the art.

Individual object or scan points are thus measured, wherein the respective distance to the scan point and the respective alignment of the scanning direction in relation to two measurement axes A1, A2 (current horizontal and vertical beam emission direction) or two angles are determined. The scanning process thus produces a point set containing three-dimensional information about the surface of the scanned objects such as building 11. The totality of the measurement points of such a measurement is referred to as the scan and may yield a point cloud, for example. A display apparatus (not illustrated here), which can be configured as a display directly on the laser scanner 1 or as a display of a connected computer, e.g. tablet or smartphone, can be connected to the control and evaluation unit.

Optionally, digital images such as high-resolution images of e.g. 1MP minimum, that allow additional color values to be assigned to the measurement points to provide a textured or colorized point cloud can also additionally be generated by means of one or often multiple color or RGB-cameras 103 of the scanner 1. Hence, such a terrestrial laser scanner 1 can be equipped with one or more cameras 103 for taking images or providing a video stream of the surroundings during the scan workflow. Moreover, such surveying devices 1 with one or more cameras 103 are also known, said cameras 103 allowing wide angle or panoramic images of the measurement space to be recorded.

As such a scanning means measuring e.g. millions of surface points by continuous sweep of the measurement beam E and continuous measurement instead of a targeted measurement of single points, the measurement space is recorded in a dense manner or completely, meaning that any object (surface) within the measurement space is scanned. This is particularly true for stationary or non-moving objects such as building 11 with windows 12, tree 14 or road sign 15 but also for movable or moving objects such as depicted vehicle 13, if being within the scan sphere resp. being hit by the measurement beam.

Not all of these objects 11-15 are of same relevancy or significance or of interest for measurement at all. Some objects like car 13 or tree 14 might even be in the line of sight from the scanner 1 to regions of interest and thus might obscure objects of interest.

The present invention provides a laser scanner 1 resp. a scanning method which provides a distinction between different objects or part of the scan sphere with regard to significance for a scan and enables an adaption thereto already during or before the actual scanning/data acquisition of 3d point measurements as described below.

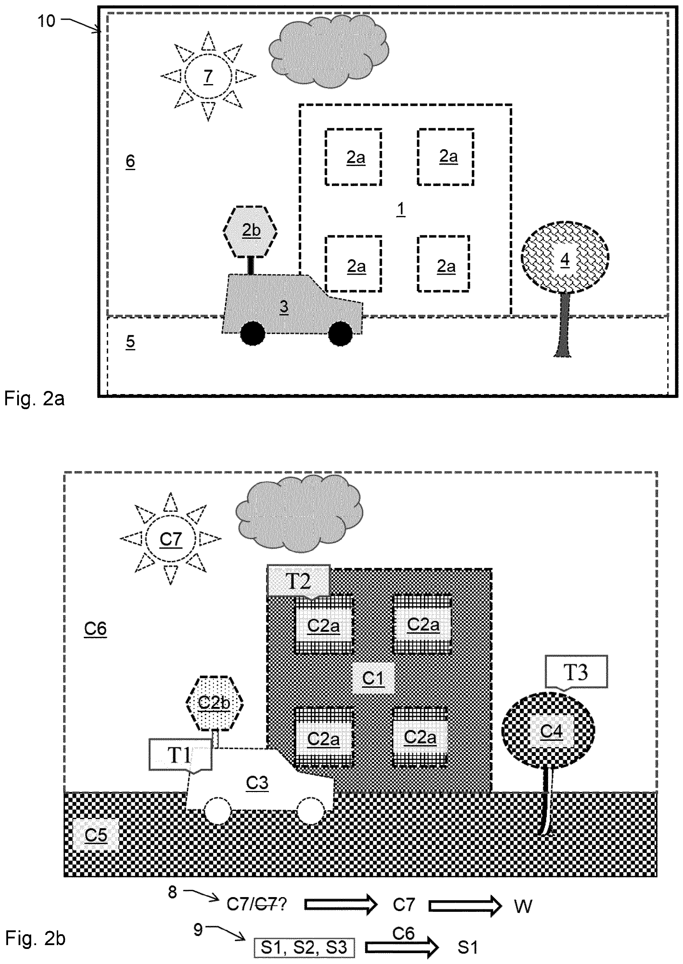

Figs. 2a, b schematically illustrate a method for scanning an environment. The method can be automatically executed by a control and evaluation unit of a stationary terrestrial laser scanner as exemplified above, in particular executed as part of a scanning functionality of the laser scanner.

Figure 2a shows a processed 2D-image 10 of (at least part) of the environment to be scanned, taken by above mentioned internal camera of the laser scanner in advance of the 3D-point measurement, preferably after the laser scanner is stationed and directly before the scan point acquisition is initiated. Preferably, panoramic images are used and/or the one or more cameras of the laser scanner provide an all-around vision. In the picture, above mentioned objects (cf. Fig. 1a), namely building, tree, street sign and vehicle are imaged, as well as the (fore-)ground and sky in the background, which can be seen as different layers of the scan sphere.

The image 10 is image processed based on a machine learning algorithm, e.g. using a Neural Processing Unit (NPU) onboard the laser scanner as part of the scanner's control and evaluation unit, for portioning or segmenting the image content according to predefined categories of significance. The algorithm can be trained on 2D-images of scan scenes taken by laser scanner cameras, whereby 3D-scan data of the respective scene can be taken into account, e.g. for improved accuracy or precision of definition of cluster size or boundaries in a 2D-image. These significance categories are machine learned and are used to divide or partition the image 10 in clusters 1, 2a, 2b, 3, 4, 5, 6, 7 as indicated in figure 2a.

As indicated in figure 2b, said clusters 1-7 are associated with significance categories C1, C2a, C2b, C3, C4, C5, C6 and C7. In the example, significance category C1 is "building" and the according cluster 1 covers the part of the image 10 which represents building 11. Significance category C2a is "window" and C2a "street sign", whereby both categories could be unified or summarized in a superior category "(highly) reflective object" such that all five clusters 2a, 2b could relate to the same category. However, in this example these reflective objects resp. the image clusters 2a, 2b determined according to the related categories C2a, C2b are further distinguished and treated separately as described below. The further categories can be denoted as C3 "vehicle", C4 "vegetation" (or "tree"), C5 "ground", C6 "sky" and C7 "sun". Hence, the image 10 is processed in such a way that presence or also absence of image clusters 1-7 of predefined scan significance categories C1-C7 is determined.

The subsequent scanning/3D-measurement is adapted based on the determined presence or absence of image clusters 1-7 resp. imaged objects of an according significance category. In other words, the scanner controller provides at least one scan parameter which is adaptable in dependence on presence or absence of categorized image clusters.

In the example, one exemplary adaptable scan parameter which is set dependent on determined significance clusters is the scan density which is indicated in figure 2b schematically by different graphical patterns. The scan density is adapted specific to scan regions -i.e. parts or partitions of the scan sphere- which scan regions are determined from the position and size of the image clusters 1-6 based on the known positional/spatial relationship of the image resp. scanner camera and beam emission resp. scan direction.

As a result, the region of high significance category C1 and thus the main measurement object, the building 1, is scanned with a (relatively) high density (indicated in figure 2b by the dense pattern) whereas other objects resp. other regions of scan categories of less significance such as tree 14, street sign 15 and the ground are measured with lower scan density (indicated in figure 2b by coarse or less dense patterns).

Scanning can be further refined by defining and applying (sub-)categories for (sub-)regions of interest of wider regions/larger objects such as a building, workpiece or the like. For example, categories such as "window (frame)", "door", "edge", "wheel", "frame" or the like can be defined/trained and used in image processing of a 2D-image 10 for determining according image clusters. Based thereon, such scan regions can be dynamically and specifically scanned with higher density for more detail.

In other words, the significance categorization can have different levels of detail for more differentiated scan adaption, allowing for instance to scan particular structures of building 11 defined by according categories with a higher resolution compared to the residual parts of building 11 (which parts e.g. refer to the main or superior category "building" wherefrom the subcategory-clusters are subtracted).

For example, surfaces of low geometric detail such as "wall" or other flat areas can be categorized by lower significance and accordingly scanned using an adapted low scan density though they are part of or lie within a (superior or larger) region which is per se of high significance. The recognition and detailed categorizing of such (sub-)regions allows to adapt scan density parameter more precisely, therewith providing an even more significance-distinguished or significance-differentiated scan result, with for example larger number of relevant points (higher accuracy for significant objects) and/or further reduced, less unnecessary scan points or data.

On the other hand, the scan density for insignificant objects/regions can even be lowered to zero, in the example the vehicle 13 and/or the sky 16 is not scanned at all resp. this scan region C3 / C6 is spared out (indicated in figure 2b by blank "pattern").

A scan parameter such as scan density can be adapted during measurement. Here, by according control of the scan beam emittance and steering, the scan density can be dynamically set, e.g. wider angular measurement steps or higher scan speed (faster rotation of the scanning beam at constant measurement rate) for lower density or shutting off the laser beam for zero scan density.

A dynamic adaption during point measurement can also be applied to the cluster dimensions and/or assignments to categories itself. That is, the information gathered during 3D-point measurement, in particular 3D-coordinates of points themselves, can be used to verify if a cluster is correctly sized or if its borders have to be refined. For example, an object's distance can be used, for (sub-)categorizing an object as "far away" (beyond a defined distance, e.g. a fixed value and/or in relation to the extent of the measurement space) for different adaption compared to an object of same category which is closer to the scanner (such a differentiation based on distance can also be based on a distance implicitly estimated from the 2D-image itself based on the imaged object size or number of pixels). The categorization can be verified, too, for example by checking reflectivity, based on intensity of received radiation.

Verification or validation of categorization or clustering can also be done in advance by a pre-measurement with the scan beam. Here, a confidence level of assignment to a significance category of clusters is determined and if the level of confidence is below a certain threshold of confidence, i.e. the category cannot be determined with sufficient confidence based on the 2D-image data, a targeted 3D-measurement of the region in question is automatically triggered. The therewith generated scan data, in particular distance values and/or intensities for scanned surfaces, then allows to assign a category with acceptable level of confidence. Hence, the availability of a 3D-imaging device is used in case of an uncertainty of categorization based on the 2D-image.

Generally, also sensor data of other sensors of the scanner can be used to adapt or check categorization and/or cluster building. Although a fully automatic execution of the method is preferred, an uncertainty of categorization could also be resolved by a user, who could for example confirm or reject a category or make a choice between categories proposed by the scan software.

As another option, further 2D-images can be captured, in particular in real-time during 3D-measurement, for verification or live-adaption or refinement of categorization or clustering. For example, a live video stream, captured in parallel to the point measurement, can be used for dynamic adaption, also of adaptable scan parameters.

A re-definition or adaption of clusters/categories based on subsequent 2D-images can also be useful for non-stationary objects such as vehicle 13 resp. clusters of category C3 to verify if such a cluster/category still is present or not. If for example in a later image, the cluster of category C3 is absent (because the vehicle has moved out of the scan range), an updated categorization without the category "vehicle" results. This adapted image clustering is then used to update scan parameters, e.g. to not leave out/blank what previously had been cluster 3 but to measure it, if this region had not been targeted yet, or to initiate a second measuring turn, e.g. a new full scan or a scan specifically targeted to the area defined by cluster 3, to fill the previously left out scan region.

Capturing of subsequent 2D-images can itself be part of an adaption based on significance categorization. That is, there can be a decision-making if further 2D-images will be captured or not dependent on determined categories C1-C7. A category C1-C7 may be seen as indicative of a near-future change in the scan environment. For instance, vehicles may be categorized, based on the (first and at least up to then, only 2D-image) into "parked vehicle" or "(probably) moving vehicle" (e.g. because an automobile is recognized as being on a parking space or to the contrary, on a street lane and/or a driver is recognized in the imaged vehicle).Then and only in case of presence of the latter category (actually or probably soon moving vehicle), further 2D-imaging at some later time is initiated. Thereby, this time parameter may also be adapted, e.g. according to a sub-category of "moving vehicle" or "moving item" such as "(fast) automobile", "(medium-speed) bicycle" and "(slow) pedestrian".

Another example of a significance category which can lead to an adaption may be a movable object like a door or window: (only) if a cluster of category "open door/window" is present, a subsequent 2D-imaging can be automatically triggered, in particular for observing if the door or window has been closed meanwhile. In addition or alternatively, a parameter controlling user messaging could be adapted. In this case, for instance the user is informed of the presence of an open door or window such that he can react and close the door/window if deemed necessary. Other examples of categories indicative of moving or movable items are feasible, too, such as animals or portable objects.

Regarding adaptable scan parameters such as a scan density, alternatively or additionally to the above said, scan density can be adapted not before collection of point measurement data but after measuring of scan points. For instance, scan points can be dismissed on the fly during measurement in that only every n-th acquired scan point is stored for scan regions corresponding to clusters of low significance. Said otherwise, in this case the beam emission needs not to be adapted but a unified or standard beam control can be applied because the adaption is on side of data evaluation or handling. Hence, for instance scan regions categorized as "vegetation" or "ground" or the like are thinned out by deletion or averaging of points in real time such that a point cloud with 3D-point clusters of different density is generated.

A region specific resp. significance specific adaption of scan density or other scan resp. point cloud parameters can also be applied to the already generated point cloud by the scanner's evaluation computer in addition to or instead of an immediate on-the-fly or live adaption, i.e. after the scan resp. the point cloud is completed.

Within the scope of the method, such a later adaption of the point cloud with respect to image-based determined region or object significance can also be postponed as "post-processing", for example for a processing outside the scanner. Therefore, a scan point tagging which provides information for such post-processing can be applied as a further example of a scanning adaption which can be altered in dependence on significance categories. In the example, scan regions C2a, C3 and C4 (representing windows 12, vehicle 13 and tree 14) are tagged by according tags T1, T2, T3.

This adaptable automatic tagging results for example in tags T1, T2, T3 which can denote the respective scan region or point cloud cluster as "window" or "reflective surface" (T2), "car", "vehicle" or "non-stationary object" (T1), "vegetation" or "tree" (T3), or any such tag or notation which a software can handle as information or meta-information for point cloud processing.

For instance, tagging of point cloud regions with tags T1 (or also T3 in view of a leaves which might move in windy environments) as referring to scan points of movable or moving objects can increase robustness of point cloud registration. For instance, such tagging enables the registration software, e.g. using an ICP-algorithm (Iterative Closest Point), to ignore or weight less such points of "non-stationary" category. Other examples of tags can relate to significance as such ("low", "high", e.g., also "unknown"), without referring to aforementioned types of object.

Another example of a significance category which improves in-the-field and/or post-processing point cloud treatment is reflectance. For example, determined regions of categories C2a, C2b signifying "high reflectance" (or, so to say, imply such high reflectance when being categorized as "window" or "street sign") provide information which enables scanning refinement. For instance, this allows to adapt a point cloud filtering resp. adapt a point cloud filter as a scan parameter, for reducing reflections or multi-path effects or adapting (in particular reducing) pulse energy. Thus, for instance a filter procedure can be adapted and applied in a targeted or more specialized manner to a point cloud or more specifically to dedicated parts of a point cloud which would be not possible without the image based categorization.

Thereby, a fine-categorization which differs between "street sign" and "window" (instead of only one category "high reflective object") allows for a further differentiated adapting the scanning. For example, different filter parameters can be set, or a same filter whilst differentiating the scanning of the different categories with respect to other scan parameters such as scan density.

Another example of significance-dependent setting of an adaptable scan parameter relates to the measurement radiation. Besides the already mentioned setting of the scan radiation strength by lowering it to zero, the intensity can also be adapted to a category of reflectivity of surface.

On the other hand, for example in case of a recognized high reflective surface such as "window", the radiation evaluation can be adapted, e.g. using pulsed radiation, the first reflex of a group of pulses is used for image determination instead of using the strongest reflected pulse which is used for scan points of other categories. In other words, a measurement pulse selection mode is adapted in response to presence or absence of object categories resp. significance categories. In particular, WFD-Scanners are able to evaluate multiple pulse returns. The invention enables to apply a significance/object-category dependent adaption of a parameter of selection out of these multiple returns.

Another example of using a presence or absence of an object of particular significance is schematically illustrated in bottom of figure 2b (reference sign 8). Here, the presence of absence of category C7 ("(artificial or natural) light source" or "sun") is determined and used for parameter adaption. In the example, presence of a cluster of category C7 is detected and in response thereto a parameter set. For instance, a parameter of the laser scanner's camera is set for capturing images for coloring or texturing the point cloud such as an auto white balancing parameter W for (more) consistent colorization across scan stations or setups.

As another example, indicated schematically at the bottom of figure 2b by reference sign 9, there is an automatic selection of a parameter S1 from a group of parameter settings S1, S2, S3 as adaption of scanning dependent on presence (or absence) of a category such as C6 by the scanner's controller. For instance, presence of category C6 "sky" triggers a selection of a camera parameter such as image resolution (e.g. LDR) for above mentioned point cloud colorization. On the other hand, determination of a category "indoor object" can trigger resolution adaption to HDR for capturing such a color image.

Selection from different predefined settings S1-S3 dependent on categories such as C6 / "sky" could also be as kind of a general pre-adaption. That is, for example parameter ranges, parameter thresholds or parameter sets which differ from one setting S1-S3 to the other can be automatically pre-selected according to a general signification category such as "sky" or "sun(light)". These parameters then are further adapted or specified within the respective available or allowed range, based on further, (parameter-)specific categories.

For instance, an overall scan rate minimum (or maximum) S1 from multiple scan rate minima S1-S3 is chosen according to a global significance category and then the scan rate is further refined individually for further categorized clusters /scan regions, observing this minimal scan rate such that all scan rates are above this lower value.

It goes without saying that these shown figures schematically show merely possible exemplary embodiments. The various approaches can also be combined with one another in accordance with the invention and combined with corresponding devices and methods of the prior art if not mentioned otherwise.

## Claims

1. Terrestrial laser scanner for coordinative measurement of a plurality of scan points representing surfaces of objects within a scan sphere, the laser scanner comprising
• a base for stationing the laser scanner,
• a body mounted on the base,
• a first motor configured for rotating the body relative to the base around an azimuth axis with a first speed,
• a first angle encoder configured for determining a first angle of the body with respect to the azimuth axis,
• an emitter configured for emitting optical measurement radiation,
• a deflector supported by the body and configured for deflecting emitted measurement radiation in form of a free beam onto a respective scan point of an object surface,
• a receiver configured for detecting reflected measurement radiation reflected back from the respective scan point and deflected onto the receiver by the deflector,
• a second motor configured for rotating the deflector relative to the body around an elevation axis with a second speed, the second speed being higher than the first speed,
• a second angle encoder configured for determining a second angle of the deflector with respect to the elevation axis,
• whereby the first and second angle together define a scanning direction,
• a control and processing unit configured for measuring of scan points by
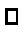 determining a distance based on detected measurement radiation reflected from the respective scan point, whereby an intensity of the reflected measurement radiation is determined,
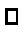 determining first and second angle of the scanning direction for the respective scan point and
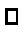 determining a coordinate of the respective scan point based on the determined first and second angle and the determined distance,
• at least one camera for capturing 2D-images with an optical camera axis in known spatial relationship to the scanning direction,
**characterized in that**
the control and processing unit is configured for
• image processing, based on a machine learning algorithm, of a first 2D-image of the scan sphere, captured with the at least one camera of the laser scanner before the measurement of scan points, in such a way that the image is partitioned in multiple clusters of different predefined categories of measurement significance,
• setting at least one adaptable scan parameter according to the presence and/or absence of clusters of a significance category in the first 2D-image.

2. Laser scanner according to claim 1
**characterized in that**
the control and processing unit is configured for
• scan region-specific setting of the adaptable scan parameter, whereby the extent of a respective scan region corresponds to the extent of a corresponding cluster, and/or
• preconfiguring the setting of the adaptable scan parameter by selecting from one of multiple preconfigured scan parameter setting modes according to the presence and/or absence of clusters of a significance category in the first 2D-image.

3. Laser scanner according to any one of the preceding claims,
**characterized in that**
the adaptable scan parameter controls at least one of
• the emitter,
• the first and/or second motor
for adapting at least one of
• a scan density,
• a scan speed,
• a strength and/or pulse duration and/or frequency of the emitted measurement radiation.

4. Laser scanner according to any one of the preceding claims,
**characterized in that**
the significance categories comprise at least one of
• scan background, in particular sky,
• vegetation.

5. Laser scanner according to any one of the preceding claims,
**characterized in that**
the significance categories comprise at least one of
• non-stationary object,
• currently moving object.

6. Laser scanner according to any one of the preceding claims,
**characterized in that**
the significance categories comprise building structure.

7. Laser scanner according to any one of the preceding claims,
**characterized in that**
the significance categories comprise at least one of
• light source, in particular artificial light source and/or natural light source,
• high reflective surface,
• low reflective surface.

8. Laser scanner according to claim 3 and 4 or 3 and 5, **characterized in that**
• the scan density is set to a relatively low level, in particular set to zero, for scan regions corresponding to image clusters of one of said categories and/or
• in case of a currently moving object category, the scanning is delayed by stopping the first motor and/or scanning is repeated when image processing of a second 2D-image, captured after the first 2D-image, indicates absence of moving object category.

9. Laser scanner according to claim 3 and 6,
**characterized in that**
the scan density is adapted to a specific category of building structure.

10. Laser scanner according to any one of the preceding claims,
**characterized in that**
the adaptable scan parameter is a parameter which controls
• the camera when capturing a point cloud colorization and/or texturing image, in particular controls an imaging resolution and/or a white balancing, and/or
• an attenuator and/or optical filter applicable to reflected measurement radiation ahead of the detector.

11. Method for scanning of a plurality of scan points representing surfaces of objects within a scan sphere with a terrestrial laser scanner, the laser scanner comprising
• a base for stationing the laser scanner,
• a body mounted on the base,
• a first motor configured for rotating the body relative to the base around an azimuth axis with a first speed,
• a first angle encoder configured for determining a first angle of the body with respect to the azimuth axis,
• an emitter configured for emitting optical measurement radiation,
• a deflector supported by the body and configured for deflecting emitted measurement radiation in form of a free beam onto a respective scan point of an object surface,
• a receiver configured for detecting reflected measurement radiation reflected back from the respective scan point and deflected onto the receiver by the deflector,
• a second motor configured for rotating the deflector relative to the body around an elevation axis with a second speed, the second speed being higher than the first speed,
• a second angle encoder configured for determining a second angle of the deflector with respect to the elevation axis,
• whereby the first and second angle together define a scanning direction,
• at least one camera for capturing 2D-images with an optical camera axis in known spatial relationship to the scanning direction,
the method comprising measuring of scan points by
• determining a distance based on detected measurement radiation reflected from the respective scan point, whereby an intensity of the reflected measurement radiation is determined,
• determining first and second angle of the scanning direction for the respective scan point,
• determining a coordinate of the respective scan point based on the determined first and second angle and the determined distance,
**characterized in that**
the method comprises
• image processing, based on a machine learning algorithm, of a first 2D-image of the scan sphere, captured with the at least one camera of the laser scanner before measuring of scan points, in such a way that the image is partitioned in multiple clusters of different predefined categories of significance for measurement,
• automatically adapting the scanning according to the presence and/or absence of clusters of a significance category in the first 2D-image.

12. Method according to claim 11,
**characterized by**
adapting the scanning by adapting
• an automatic tagging of measured scan points, in particular with regard to relevancy and/or quality, and/or
• an automatic sorting out of measured scan points.

13. Method according to claim 11 or 12 for a laser scanner according to claim 7,
**characterized in that**
the measurement radiation is emitted in form of pulses and for scan regions corresponding to image clusters of one of said categories, adapting the scanning by adapting a selecting of reflected pulses for a respective scan point used for distance determination.

14. Method according to one of claims 11 to 13,
**characterized by**
automatically verifying sizes of clusters and/or assignment of clusters to significance categories using information gathered with received measurement radiation, in particular a determined 3D-coordinate and/or a quality of the received radiation,
• in advance of said measurement of scan points by determining a level of confidence of cluster size and/or assignment and targeted pre-measurement of low-level confidence regions, and/or
• in real-time during the measuring of scan points using data of already measured scan points.

15. Computer programme product comprising programme code which is stored on a machine-readable medium, or being embodied by an electromagnetic wave comprising a programme code segment, and having computer-executable instructions for performing, particularly when executed on a processing unit of a laser scanner according to claim 1, the method according to claim 11.
